# EUROPEAN PATENT SPECIFICATION

(11) **EP 0 393 255 B1**
(45) Date of publication and mention of the grant of the patent: **01.12.1993**
(21) Application number: 89201020.8
(22) Date of filing: 20.04.1989
(51) Int. Cl.: B29C 67/22

(54) **Crushing machine**
Komprimiervorrichtung
Dispositif de compactage

(43) Date of publication of application: 24.10.1990
(73) Proprietor: "N.V. KONSTRUKTIEWERKHUIZEN DE METS", B-8701 Kachtem-Izegem (BE); "DUMO PLASTICS", B-8800 Roeselare (BE)
(72) Inventor: Desmet, Erik, B-8800 Roeselare (BE); Nemegeer, Roger, B-8800 Roeselare (BE)
(74) Representative: Pieraerts, Jacques

(56) References cited:
- EP-A- 0 010 645
- EP-A- 0 084 862
- DE-A- 1 930 585
- FR-A- 2 001 888
- US-A- 4 134 945

## Description

The present invention relates to a process for crushing foam material with a cellular structure such as polyether, polyester, phenol, polyurethane foams and the like, in order to rupture the small membranes of the cells of the foam material, in which process the foam material is compressed in a first direction and subjected in its compressed state to a shear motion in a second direction different from said first direction.

Such a method is disclosed in EP-A1-0 010 645. In this known method, tennis balls are cut out of a block of foam material. In order to increase the elasticity of these tennis balls, they are guided between two parallel conveyor belts, which are disposed on such a mutual distance that the tennis balls are compressed to about half their diameter. Both conveyor belts move at a different speed, either in the same or in the opposite direction, more particularly in such a manner that the tennis balls roll between these conveyor belts. In this way, the cells of the foam material are ruptured.

A drawback of this known method consist in that it can only be used for crushing round objects since blocks or plates of foam material can clearly not be rolled between two conveyor belts.

However, an object of the present invention is to provide a method for crushing all possible volumes or blocks of foam material, irrespective of the relation between the height, width and length of the blocks concerned. The term of "foam" refers to any type of cellular material and, more specifically, to cellular material where the small membranes that have been formed between the ribs of the material need to be broken up in order to obtain an open cellular structure that complies with the required resilience standards of the material.

The crushing of foam blocks can not be achieved in a satisfactory manner by compressing the foam material in one specific direction only. Even such compressing according to three directions (X, Y and Z) does not provide an adequate result. This means that the small membranes that provide the cells with a closed structure will be broken up neither regularly nor in an adequate manner. Such foam material will be considered as inadequately crushed.

Although the process described in broad outline above provides a reasonable result with low density foams, the result has to be considered as entirely inadequate with high density foams.

Crushing foam material by having the material pass through rollers failed to provide good results.

Causing a high pressure around the foam blocks by pyrotechnical means or vice versa, applying a low pressure and, in this event, repeating these operations, also failed to provide good results where applicability was concerned.

The object of the invention is to present a process and a device that provide remarkable results in a new and original manner and this in particular for crushing blocks which cannot be rolled between conveyor belts.

For this purpose and in accordance with the invention, said foam material, in particular a block of foam material, is subjected to a reciprocating shear motion in said second direction.

The invention also relates, of course, to the device used for carrying out the process a outlined above, with the purpose of crushing the small membranes that are forming the pores of the foam material.

The object of the invention is to prescribe a device that uses technically reliable means for the purpose of making possible the performance of the process described in the introduction, under excellent conditions.

The device according to the invention comprises at least two press table means for compressing said foam material between them, and drive means for moving at least a first of said two press tablemeans along the other while said foam material is compressed between both press table means and is characterized in that said drive means are provided for subjecting said first press table means to a reciprocating motion with respect to the second press table means so as to exert a reciprocating shear force onto said foam material, in particular a block of foam material.

In a preferred embodiment of the device according to the invention, each of said two press table means comprise a series of positively driven rollers for compressing the foam material therebetween and for conveying the compressed foam material, said drive means being provided for rotating both series of rollers in a manner such as to exert a reciprocating shear force onto the compressed foam material conveyed between both series of rollers.

In a further preferred embodiment of the device according to the invention, one of the aforesaid press table means i.e. that considered as the top press table, allows for being moved in a reciprocating motion vertically and above the bottom press table is arranged a conveyor belt used for feeding the foam material to be compressed.

Other details and advantages of the invention will be shown by the description below of a process and a device used for crushing blocks of foam material according to the invention. This description is provided as an example only and does not restrict the invention. The reference numbers refer to the figures appended hereto.

Figures 1 to 5 illustrate diagrammatically five successive steps that exemplify the process according to the invention.

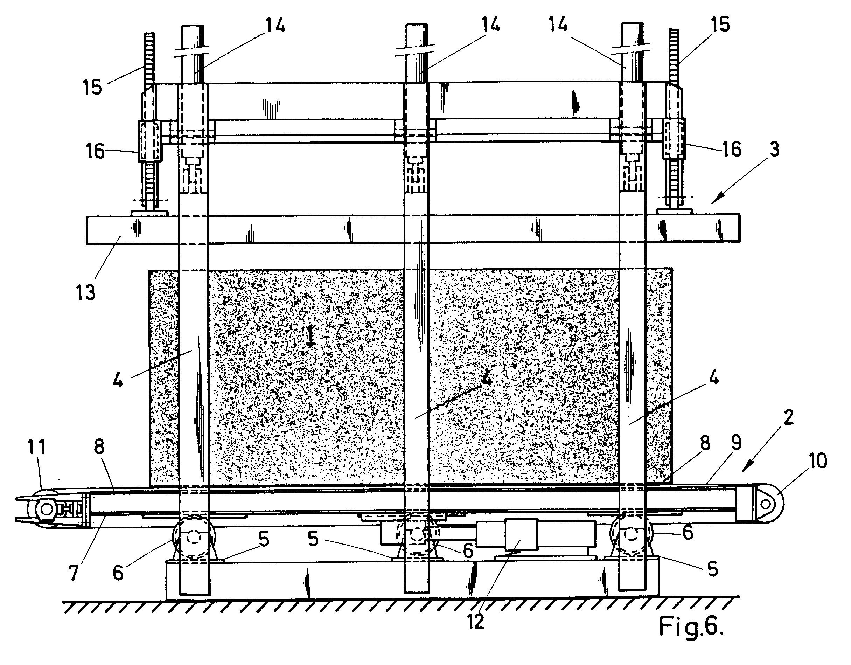

Figure 6 is a diagrammatic front view of the device according to the invention, with the top press table of the press in the uppermost position.

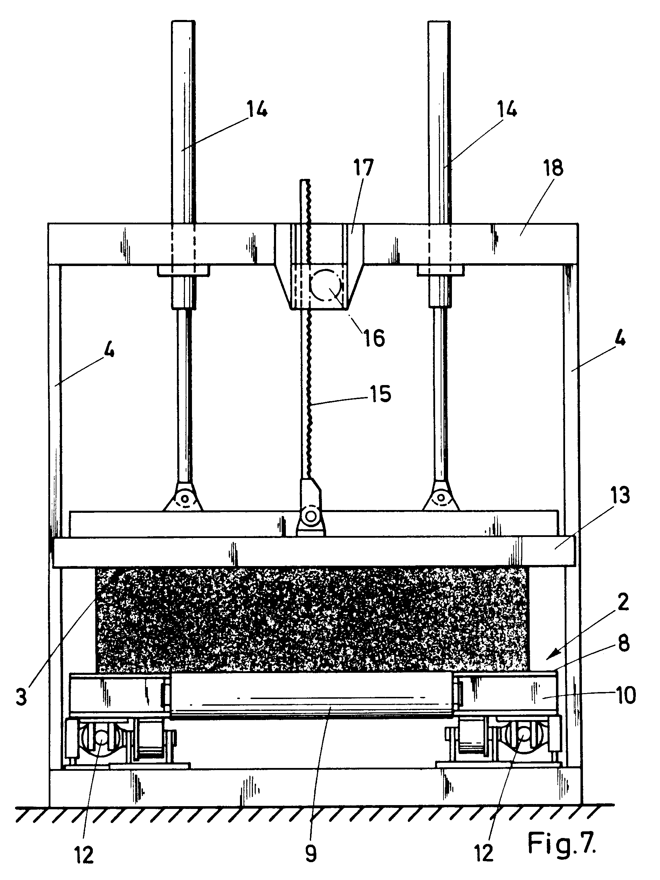

Figure 7 is an also diagrammatic lateral view of the same device with the press table downwards and with foam blocks visible in compressed condition.

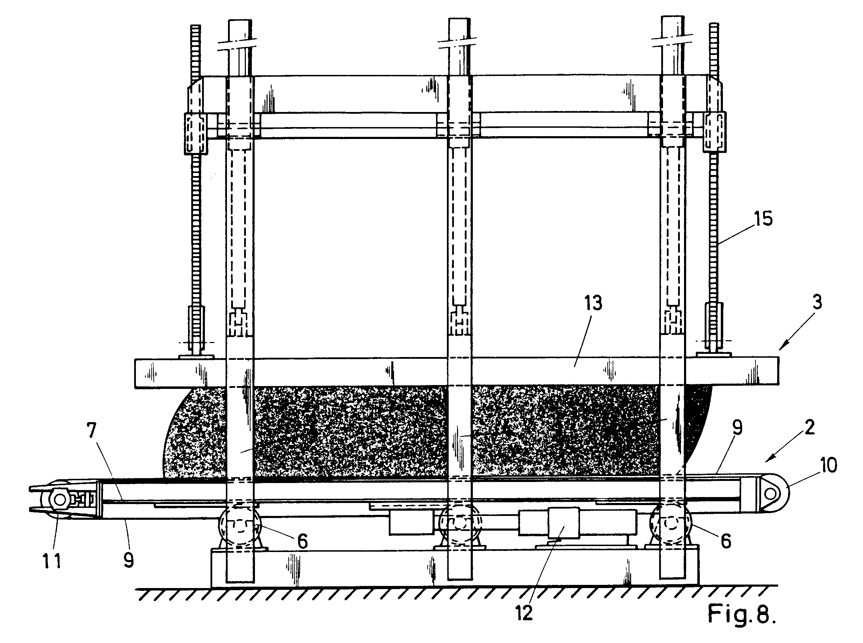

Figure 8 is an also diagrammatic front view of the device with the press table in the lowest position and during the lateral shifting of the bottom press table in the course of the pressing process of a foam block.

In the process according to the invention there is started from a block of foam material 1 of which the cellular structure needs to be changed in order to obtain a final product that meets the required or desired standards of resilience.

The straight line 2 represents diagrammatically a bottom press table while the straight line 3 represents, on the other hand, the top press table.

If a vertically downwards pressure is exerted, onto the block 1, i.e. as shown by arrow P, then no adequate crushing of the foam material of which block 1 consists is obtained, as explained in the introduction above, even after having repeated these operations.

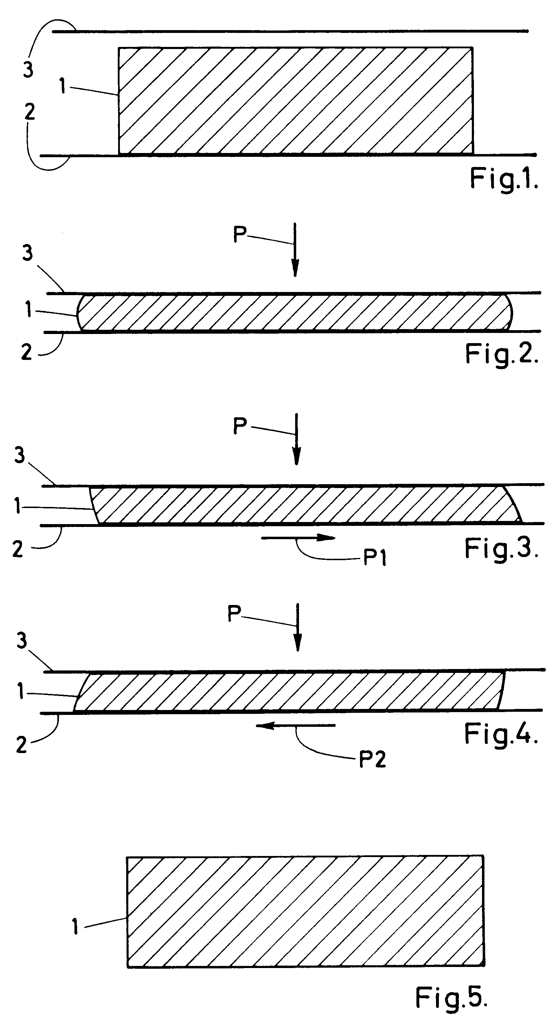

In order to achieve the result desired, the block of foam material 1 compressed between the top and the bottom press table 3, respectively 2, needs to be subjected to a lateral shift according to arrow P1 (figure 3). The pressure according to arrow P and the extent of this pressure will be recorded. The same operation is carried out in the opposite sense as shown by figure 4. The lateral shift will then be according to arrow P2. In principle, the shift may take place in several directions.

The block of foam material 1 of figure 5 is then presumed to display the required resilient properties, depending on the density of the foam material and on other parameters that may influence its structure.

In general, in the process according to the present invention, the foam material 1 is compressed in a first direction P and subjected in its compressed state to a reciprocating shear motion P1, P2 in a second direction different from said first direction P. In this way, an efficient crushing of the cells of the foam material can be obtained, especially for blocks of foam material.

It has become apparent that the results obtained are not better in the event where a block of foam material 1 is being moved in a transverse direction that extends at right angles as compared to the first transverse direction.

In order to make this process whose excellent surprising results have been established, feasible under the technically most appropriate conditions, a device is presented which is composed, in principle, of a frame, the essential elements whereof will be named in the framework of this description but that will all be considered as static components. This is true, among others, for the six posts 4 and the three small cross beams 5 that connect the posts 4 two by two. The term "two by two" has to be understood in the transverse direction of the device. The device itself is elongated. This means that the space in which the foam block compressing process is taking place, constitutes its largest dimension in length as compared to its width. It is obvious that this is not binding as regards the invention itself.

To the small cross beams 5 are fitted running wheels 6. Each small cross beam is thus carrying two running wheels 6. On these running wheels 6 rests the bottom press table that is referred to in the various figures always by the general reference 2.

Actually, the bottom press table consists of at least two or more longitudinal beams 7 that are carrying, on top, a plate 8 above which is led a conveyor belt 9 over drums 10 and 11. One of these drums can be driven temporarily, among other things in order to move a block of foam material to the proper place between the top and the bottom press table and to remove the processed or crushed block therefrom.

The reciprocating displacement of the bottom press table 2 is ensured by two hydraulic cylinders 12 that are assembled laterally as compared to the longitudinal beam 7.

The width of the conveyor belt 9 does not need to be the same as that of the plate 8 of the bottom press table. It will be sufficient for the width of the conveyor belt to be adjusted to the width of the blocks of foam material to be processed.

The top press table 3 consists, of course, of an actual press plate 13 moved downwards and upwards by double-action hydraulic cylinders 14.

Six such cylinders are to be seen in the figures but this will obviously be a matter of choice and of advantageous distribution of pressure.

To ensure the horizontal plane of the top press table during the upwards and downwards displacements thereof, a toothed lath 15 is fitted at both ends , considered in the longitudinal direction of this top press table, to the press table. Each toothed lath 15 is co-operating with a toothed wheel 16 assembled for free rotation in a housing 17 that is fixed in relation to the fixed components of the plant. One such fixed component is one of the cross beams 18 that connect the posts 4 above and to which are fitted the double-action hydraulic cylinders 14.
The two toothed wheels 16 are interconnected by a torsion bar.

It is obvious that all the connections between the hydraulic cylinders 14 and the toothed lath 15 with the top press table 3 allow for slight hinged movements.

The horizontal plane,in the transverse direction of the plant, is ensured by the hydraulic cylinders 14 themselves.

From the description provided up to now of the process and the device derived therefrom for crushing blocks of foam material we can directly draw the conclusion that the pressure to be applied to these blocks of foam material can be adjusted very easily. Excellent results have been achieved when such blocks of foam material were compressed to 25 % of their volume and subjected in this condition to a transverse displacement between the top and the bottom press table.

Because of the simple structure of the components of the device, the extent of this lateral or transverse shift is adjustable, too. It is also obvious that a repetition of the operations to which a block of foam material needs to be subjected can be programmed in a very simple manner.

The device has been designed for the purpose of being integrated in a large size conveyor system, possibly of forming the final section thereof.

It is also obvious that in the framework of this application for a patent we shall not discuss parameters such as the pressure, the length of the cylinder course, the length of the transverse shifting displacement, considering that these values need to be adjusted as a function of the cell structure of the foam material to be processed and that, as already mentioned above, they can be changed easily.

The invention is not restricted either to the form of embodiment shown above by way of example, and numerous changes may be made therein with exceeding the scope of the application for a patent.

Essentially characteristic for the invention is the fact that a material featuring a closed cellular structure and the resilient properties whereof need to be changed by breaking up the small membranes that determine the size of the cell, can be crushed in a surprisingly homogeneous manner by subjecting the material compressed at a specific pressure to one or to several lateral or transverse shifts.

In a possible further embodiment, the device for crushing blocks of foam material may comprise at least two series of positively driven rollers. The foam material to be crushed is compressed between the two series of rollers and subjected simultaneously to a reciprocating shear force in a direction different from the direction wherein the foam material is compressed.

In order to obtain such a reciprocating shear force, the rollers of one series may be driven at a peripheral speed different from the peripheral speed of the rollers of the other series. The same effect can however be achieved by using rollers having an oval cross-section. In each case, the reciprocating motion takes place in a direction different from the direction wherein the foam material is compressed.

It is clear that this principle on which the invention is based, allows for applications that differ significantly from the form of embodiment described here. This applies, of course, for notions such as vertical and horizontal. The press tables do not have to extend necessarily in a horizontal plane if the feeding of the material to be crushed needs to take place vertically. The standards presented here appear to be the most obvious ones, but they are not binding where the invention is concerned.

It can also be imagined to superpose several press tables. It is not necessary either for the bottom press table to be made movable. The standards presented here appear to be the most obvious ones, but they are not binding where the invention is concerned.

## Claims

1. Process for crushing foam material in order to rupture the small membranes of the cells of the foam material, in which process the foam material is compressed in a first direction (P) and subjected in its compressed state to a shear motion in a second direction (P1) different from said first direction (P), characterized in that said foam material, in particular a block (1) of foam material, is subjected to a reciprocating shear motion in said second direction.

2. Device for crushing foam material comprising at least two press table means (2, 3) for compressing said foam material between them, and drive means (12) for moving at least a first of said two press table means (2, 3) along the other while said foam material is compressed between both press table means (2, 3) characterized in that said drive means (12) are provided for subjecting said first press table means (2) to a reciprocating motion with respect to the second press table means (3) so as to exert a reciprocating shear force onto said foam material, in particular a block (1) of foam material.

3. A device according to claim 2, characterized in that each of said two press table means comprise a series of positively driven rollers for compressing the foam material therebetween and for conveying the compressed foam material, said drive means being provided for rotating both series of rollers in a manner such as to exert a reciprocating shear force onto the compressed foam material conveyed between both series of rollers.

4. A device according to claim 3, characterized in that said rollers have an oval cross-section, the rollers of one series being arranged opposite the rollers of the other series in a manner such as to obtain said reciprocating shear force on the compressed foam material conveyed therebetween.

5. Device according to claim 2, characterized in that the aforesaid press table means consists of a top and of a bottom press table (2) respectively (3) and that both press tables are in a horizontal plane.

6. Device according to claim 5, characterized in that one of the aforesaid press tables is adapted to be subjected to a vertically reciprocating motion.

7. Device according to either one of the claims 5 and 6, characterized in that above the bottom press table (2) is arranged a conveyor belt (9) for feeding the foam material (1) to be compressed.

8. Device according to claim 7, characterized in that the aforesaid bottom press table (2) with the pertaining conveyor belt (9) is part of a frame component that can be subjected, just like a carriage, to a horizontal reciprocating motion while the top press table (3) moves or has been moved downwards and the foam material (1) is in compressed condition or is being compressed.

9. Device according to any one of the claims 5 to 8, characterized in that the aforesaid top press table (3) is moved downwards by several hydraulic cylinders fitted solidly between, on one hand, a fixed component of the press and, on the other hand, a component that belongs to the top press table (3).

10. Device according to claim 9, characterized in that the aforesaid top press table (3) is moved along vertical posts (4) that belong to a frame of the device, and that the horizontal position, in the longitudinal direction of the aforesaid top press table (3), is insured during the up-and-down motion of the latter by toothed laths (15) that are connected to the bottom press table (2) and that cooperate each with a toothed wheel (16) assembled for free rotation at the top press table (3).

11. Device according to claim 10, characterized in that the aforesaid toothed wheels (16) are interconnected by a torsion bar.

12. Device according to claim 11, characterized in that the aforesaid toothed laths (15) and the toothed wheels (16) co-operating therewith are located on that side of the top press table (3) that, considered in the longitudinal direction thereof, may be considered as the input and the output side of the foam material.

13. Device according to any one of the claims 5 to 11, characterized in that the aforesaid bottom press table (2) is provided to be subjected to a reciprocating motion, in relation to the fixed components of the press, by at least one hydraulic cylinder (12).

14. Device according to claim 13, characterized in that one hydraulic cylinder (12) is provided for along both sides of the bottom press table (2).

## Patentansprüche

1. Verfahren zum Quetschen von Schaumstoffmaterial, um die kleinen Membranen der Zellen des Schaumstoffmaterials aufzubrechen, wobei bei dem Verfahren das Schaumstoffmaterial in einer ersten Richtung (P) zusammengedrückt wird und in seinem zusammengedrückten Zustand einer Scherbewegung in einer zweiten Richtung (P1) ausgesetzt wird, die sich von der ersten Richtung (P) unterscheidet, **dadurch gekennzeichnet**, daß das Schaumstoffmaterial, insbesondere ein Block (1) aus Schaumstoffmaterial, einer hin- und hergehenden Scherbewegung in der zweiten Richtung ausgesetzt wird.

2. Vorrichtung zum Quetschen Von Schaumstoffmaterial, die wenigstens zwei Preßtischeinrichtungen (2,3) zum Zusammendrücken des Schaumstoffmaterials zwischen ihnen, sowie eine Antriebseinrichtung (12) zum Bewegen wenigstens einer ersten der zwei Preßtischeinrichtungen (2,3) an der anderen entlang umfaßt, während das Schaumstoffmaterial zwischen beiden Preßtischeinrichtungen (2,3) zusammengedrückt wird, **dadurch gekennzeichnet**, daß die Antriebseinrichtung (12) dazu dient, die erste Preßtischeinrichtung (2) einer Hin- und Herbewegung in bezug auf die zweite Preßtischeinrichtung (3) auszusetzen, um so eine sich hin- und herbewegende Scherkraft auf das Schaumstoffmaterial, insbesondere einen Block (1) aus Schaumstoffmaterial, auszuüben.

3. Vorrichtung nach Anspruch 2, **dadurch gekennzeichnet**, daß jede der beiden Preßtischeinrichtungen eine Reihe von formschlüssig angetriebenen Walzen umfaßt, die das Schaumstoffmaterial zwischen sich zusammendrücken und das zusammengedrückte Schaumstoffmaterial transportieren, wobei die Antriebseinrichtung beide Reihen von Walzen auf eine Weise dreht, daß eine sich hin- und herbewegende Scherkraft auf das zusammengedrückte Schaumstoffmaterial ausgeübt wird, das zwischen beiden Walzenreihen transportiert wird.

4. Vorrichtung nach Anspruch 3, **dadurch gekennzeichnet**, daß die Walzen einen ovalen Querschnitt haben, wobei die Walzen einer Reihe den Walzen der anderen Reihe so gegenüberliegend angeordnet sind, daß die sich hin- und herbewegende Scherkraft auf das zusammengedrückte Schaumstoffmaterial erzeugt wird, das zwischen ihnen transportiert wird.

5. Vorrichtung nach Anspruch 2, **dadurch gekennzeichnet**, daß die Preßtischeinrichtung aus einem oberen und einem unteren Preßtisch (2), bzw. (3) besteht, und daß beide Preßtische in einer horizontalen Ebene liegen.

6. Vorrichtung nach Anspruch 5, **dadurch gekennzeichnet**, daß einer der Preßtische einer vertikalen Hin- und Herbewegung ausgesetzt werden kann.

7. Vorrichtung nach Anspruch 5 und 6, **dadurch gekennzeichnet**, daß über dem unteren Preßtisch (2) ein Förderband (9) zur Zufuhr des zusammenzudrückenden Schaumstoffmaterials (1) angeordnet ist.

8. Vorrichtung nach Anspruch 7, **dadurch gekennzeichnet**, daß der untere Preßtisch (2) mit dem damit verbundenen Förderband (9) Teil eines Gestellbauteils ist, das wie ein wagen einer horizontalen Hin- und Herbewegung unterzogen werden kann, während sich der obere Preßtisch (3) nach unten bewegt oder nach unten bewegt worden ist und sich das Schaumstoffmaterial (1) in zusammengedrücktem Zustand befindet oder zusammengedrückt wird.

9. Vorrichtung nach einem der Ansprüche 5 bis 8, **dadurch gekennzeichnet**, daß der obere Preßtisch (3) durch mehrere Hydraulikzylinder nach unten bewegt wird, die fest zwischen einem stationären Bauteil der Presse auf der einen Seite und einem zu dem oberen Preßtisch (3) gehörendon Bauteil auf der anderen Seite angebracht sind.

10. Vorrichtung nach Anspruch 9, **dadurch gekennzeichnet**, daß der obere Preßtisch (3) an vertikalen Stützsäulen (4) bewegt wird, die zu einem Gestell der Vorrichtung gehören, und daß die horizontale Position in der Längsrichtung des oberen Preßtisches (3) während der Auf- und Abbewegung des letzteren durch Zahnleisten (15) gewährleistet wird, die mit dem unteren Preßtisch (2) verbunden sind, und die jeweils mit einem Zahnrad (16) zusammenwirken, das frei drehbar an dem oberen Preßtisch (3) angebracht ist.

11. Vorrichtung nach Anspruch 10, **dadurch gekennzeichnet**, daß die Zahnräder (16) durch einen Torsionsstab miteinander verbunden sind.

12. Vorrichtung nach Anspruch 11, **dadurch gekennzeichnet**, daß die Zahnleisten (15) und die Zahnräder (16), die mit selbigen zusammenwirken, an der Seite des oberen Preßtisches (3) angeordnet sind, die in Längsrichtung desselben als die Eingangs- und die Ausgangsseite des Schaumstoffmaterials betrachtet werden kann.

13. Vorrichtung nach einem der Ansprüche 5 bis 11, **dadurch** gekennzeichnet, daß der untere Preßtisch (2) einer Hin- und Herbewegung in bezug auf die stationären Bauteile der Presse durch wenigstens einen Hydraulikzylinder (12) ausgesetzt wird.

14. Vorrichtung nach Anspruch 13, **dadurch gekennzeichnet**, daß ein Hydraulikzylinder (12) an beiden Seiten des unteren Preßtisches (2) vorhanden ist.

## Revendications

1. Procédé d'écrasement d'une matière en mousse afin de rompre les petites membranes des cellules de la matière en mousse, procédé dans lequel la matière en mousse est comprimée dans une première direction (P) et est soumise dans son état comprimé à un mouvement de cisaillement dans une seconde direction (P1) différente de la première direction (P), caractérisé en ce que la matière en mousse, en particulier un bloc (1) de matière en mousse, est soumise à un mouvement de cisaillement alternatif dans la seconde direction susdite.

2. Dispositif pour écraser une matière en mousse comprenant au moins deux moyens de plateau de serrage (2, 3) pour comprimer la matière en mousse entre ceux-ci, et un moyen de commande (12) pour déplacer au moins un des deux moyens de plateau de serrage (2, 3) le long de l'autre pendant que la matière en mousse est comprimée entre les deux moyens de plateau de serrage (2, 3), caractérisé en ce que le moyen de commande (12) est prévu pour soumettre le premier moyen de plateau de serrage (2) à un mouvement alternatif par rapport au second moyen de plateau de serrage (3) de manière à exercer une force de cisaillement alternative sur la matière en mousse, en particulier un bloc (1) de matière en mousse.

3. Dispositif suivant la revendication 2, caractérisé en ce que chacun des moyens de plateau de serrage comprend une série de rouleaux commandés positivement pour comprimer la matière en mousse entre ceux-ci et pour transporter la matière en mousse comprimée, le moyen de commande précité étant prévu pour entraîner en rotation les deux séries de rouleaux de manière à exercer une force de cisaillement alternative sur la matière en mousse comprimée transportée entre les deux séries de rouleaux.

4. Dispositif suivant la revendication 3, caractérisé en ce que les rouleaux ont une section transversale ovale, les rouleaux d'une série étant agencés à l'opposé des rouleaux de l'autre série de manière à obtenir la force de cisaillement alternative précitée sur la matière en mousse comprimée transportée.

5. Dispositif suivant la revendication 2, caractérisé en ce que les moyens de plateau de serrage susdits sont formés respectivement d'un plateau de serrage supérieur et inférieur (2, 3) et en ce que les deux plateaux de serrage sont dans un plan horizontal.

6. Dispositif suivant la revendication 5, caractérisé en ce que l'un des plateaux de serrage susdits est adapté pour être soumis à un mouvement alternatif vertical.

7. Dispositif suivant l'une ou l'autre des revendications 5 et 6, caractérisé en ce qu'au-dessus du plateau de serrage inférieur (2) est agencée une bande transporteuse (9) pour amener la matière en mousse (1) à être comprimée.

8. Dispositif suivant la revendication 7, caractérisé en ce que le plateau de serrage inférieur (2) susdit avec la courroie transporteuse concernée (9) fait partie d'un élément structural qui peut être soumis, à la manière d'un chariot, à un mouvement alternatif horizontal pendant que le plateau de serrage supérieur (3) se déplace ou a été abaissé et que la matière en mousse (1) est à l'état comprimé ou est en cours de compression.

9. Dispositif suivant l'une quelconque des revendications 5 à 8, caractérisé en ce que le plateau de serrage supérieur (3) susdit est abaissé par plusieurs cylindres hydrauliques fermement adaptés entre, d'une part, un élément fixe de la presse et, d'autre part, un élément qui appartient au plateau de serrage supérieur (3).

10. Dispositif suivant la revendication 9, caractérisé en ce que le plateau de serrage supérieur (3) susdit est déplacé le long de montants verticaux (4) qui appartiennent à un cadre du dispositif et en ce que la position horizontale, dans la direction longitudinale dudit plateau de serrage supérieur (3), est assurée au cours du mouvement ascendant et descendant de celui-ci par des lattes dentées (15) qui sont reliées au plateau de serrage inférieur (2) et qui coopèrent chacune avec une roue dentée (16) assemblée pour une rotation libre au plateau de serrage supérieur (3).

11. Dispositif suivant la revendication 10, caractérisé en ce que les roues dentées (16) susdites sont reliées entre elles par une barre de torsion.

12. Dispositif suivant la revendication 11, caractérisé en ce que les lattes dentées (15) susdites et les roues dentées (16) coopérant avec celles-ci sont disposées du côté du plateau de serrage supérieur (3) qui, considéré dans la direction longitudinale de celui-ci, peut être considéré comme étant le côté d'entrée et de sortie de la matière en mousse.

13. Dispositif suivant l'une quelconque des revendications 5 à 11, caractérisé en ce que le tableau de serrage inférieur (2) susdit est formé pour être soumis à un mouvement alternatif, par rapport aux éléments fixes de la presse, d'au moins un cylindre hydraulique (12).

14. Dispositif suivant la revendication 13, caractérisé en ce qu'un cylindre hydraulique (12) est prévu le long des deux côtés du plateau de serrage inférieur (2).
